# EUROPEAN PATENT SPECIFICATION

(11) **EP 3 165 566 B1**
(45) Date of publication and mention of the grant of the patent: **15.05.2019**
(21) Application number: 15815513.5
(22) Date of filing: 16.06.2015
(51) Int. Cl.: C08L 9/06, B60C 1/00, C08K 3/06, C08K 5/5398, C08L 15/00

(54) **TREAD RUBBER COMPOSITION AND PNEUMATIC TIRE**
REIFENPROFILKAUTSCHUKZUSAMMENSETZUNG UND LUFTREIFEN
COMPOSITION DE CAOUTCHOUC POUR BANDE DE ROULEMENT, ET PNEUMATIQUE

(30) Priority: 02.07.2014 JP 2014136859
(43) Date of publication of application: 10.05.2017
(73) Proprietor: Sumitomo Rubber Industries, Ltd., Kobe-shi, Hyogo 651-0072 (JP)
(72) Inventor: MIYAZAKI Tatsuya, Kobe-shi Hyogo 651-0072 (JP); WASHIZU Kensuke, Kobe-shi Hyogo 651-0072 (JP)
(74) Representative: TBK
(86) International application number: PCT/JP2015/067343
(87) International publication number: WO 2016/002506

(56) References cited:
- EP-A1- 0 832 930
- EP-A2- 0 945 488
- JP-A- H1 129 657
- JP-A- 2000 289 407
- JP-A- 2001 030 703
- JP-A- 2004 238 507
- JP-A- 2005 336 483
- JP-A- 2009 073 886
- JP-A- 2011 122 136
- JP-A- 2012 046 602
- JP-A- 2013 189 499
- JP-A- 2014 080 550
- US-B1- 6 197 868

## Description

### TECHNICAL FIELD

The present invention relates to a rubber composition for treads, and a pneumatic tire that includes a tread formed from the rubber composition for treads.

### BACKDROUND ART

Rubber compositions for use in treads of pneumatic tires are usually prepared by adding fillers such as silica or carbon black, and softeners such as low temperature plasticizers, process oils, or resins having a softening point of 160°C or lower to a rubber component including diene rubber. Further, thereto are added sulfur and zinc oxide, and optionally vulcanization accelerators such as thiazole vulcanization accelerators (e.g. TBBS, CBS), thiuram vulcanization accelerators (e.g. TBZTD), or guanidine vulcanization accelerators (e.g. DPG), and they are kneaded and formed, followed by crosslinking by heat pressing in a vulcanizer to produce pneumatic tires.

The pneumatic tires thus produced are required to have grip performance, abrasion resistance, tensile properties, and other properties.

Patent Literature 1 discloses a technique that involves incorporation of an alkoxysilane polysulfide, zinc dithiophosphate, and a guanidine derivative with a diene elastomer to promote a coupling reaction, thereby improving abrasion resistance and tensile properties.

High softener content compositions with increased amount of softeners have also been studied in order to improve grip performance, abrasion resistance, tensile properties, and other properties. Such high softener content compositions that incorporate at least a certain amount of softeners with a rubber component including diene rubber show high grip performance, but unfortunately lead to the occurrence of blowing (porosity) during high-temperature running. Particularly for racing tires, since in summer the temperature of the tire tread rises up to 100°C and the internal temperature of the tread rises up to 120°C, no occurrence of blowing is required even when the tires are run approximately 40 laps of a circuit at such high temperatures. If blowing occurs in the tread during a race, then rubber stiffness decreases so that running lap time deteriorates, and further the tread portion may even be broken, chipped, or separated. However, there has not been established a technique that allows a high softener content composition incorporating at least a certain amount of a softener with a rubber component including diene rubber to show high grip performance while reducing the occurrence of blowing even during high-temperature running.

US 6 197 868 B1 describes a pneumatic tire having a tread layer. A rubber composition of the tread layer includes a specific diene-based rubber component, and either a specific zinc dithiophosphate vulcanization accelerator, or a specific zinc dithiophosphate vulcanization accelerator and a benzothiazole vulcanization accelerator.

EP 0 945 488 A2 describes a rubber composition comprising 100 parts by weight of a rubber component which comprises at least one type of rubber selected from the group consisting of natural rubber and diene synthetic rubbers, 0.1 to 10 parts by weight of at least one type of a specific metal dithiophosphate, optionally 15 to 85 parts by weight of a reinforcing inorganic filler, and optionally a specific tertiary amine compound in an amount of 0.5 to 15% by weight of the amount of the reinforcing inorganic filler.

JP 2004 238507 A describes a rubber composition which is obtained by compounding a metal salt of a dithiophosphoric acid having a specific structure as a vulcanization accelerator and an organic thiosulfate compound having a specified structure as a vulcanizing agent with a rubber component containing at least one of a polybutadiene rubber having >=30% proportion of a vinyl bond, and a styrene-butadiene copolymer rubber.

JP 2011 122136 A and JP 2012 046602 A each describe rubber compositions for a tread and pneumatic tires with the treads.

### CITATION LIST

### PATENT LITERATURE

Patent Literature 1: JP 4596646 B

### SUMMARY OF INVENTION

### TECHNICAL PROBLEM

The present invention aims to solve the above problem and provide a rubber composition for treads having high grip performance, abrasion resistance, and tensile properties and capable of reducing the occurrence of blowing even during high-temperature running although it is a high softener content composition incorporating at least a certain amount of a softener with a rubber component including diene rubber. The present invention also aims to provide a pneumatic tire including a tread formed from the rubber composition for treads.

### SOLUTION TO PROBLEM

One aspect of the present invention relates to a rubber composition for treads, containing:
a diene rubber including styrene-butadiene rubber;
at least one softener selected from the group consisting of low temperature plasticizers, process oils, and resins having a softening point of 160°C or lower;
zinc dithiophosphate; and
sulfur,
wherein, per 100 parts by mass of the diene rubber,
   there are 40 parts by mass or more of the softener, 0.2 to 15 parts by mass of the zinc dithiophosphate, 4 parts by mass or more of the vulcanization accelerator, and less than 2.5 parts by mass of zinc oxide.

Preferably, in the rubber composition for treads of the present invention, the diene rubber includes 60% by mass or more of a styrene-butadiene rubber having a styrene content of 19% to 60%.

Preferably, in the rubber composition for treads of the present invention, not more than 2.0 parts by mass of zinc oxide, preferably no zinc oxide, is present per 100 parts by mass of the diene rubber.

Preferably, the rubber composition for treads of the present invention contains a carbon black having a BET value of 151 m²/g or more in an amount of 5 to 130 parts by mass per 100 parts by mass of the diene rubber.

Preferably, the rubber composition for treads of the present invention contains an inorganic filler having a BET value of 3 to 120 m²/g in an amount of 1 to 70 parts by mass per 100 parts by mass of the diene rubber, and the inorganic filler includes at least one selected from the group consisting of compounds represented by the formula below, magnesium sulfate, and silicon carbide,

mM·xSiO_{y}·zH₂O

wherein M represents at least one metal selected from the group consisting of Al, Mg, Ti, Ca, and Zr, or an oxide or hydroxide of the metal; m represents an integer of 1 to 5; x represents an integer of 0 to 10; y represents an integer of 2 to 5; and z represents an integer of 0 to 10.

Preferably, in the rubber composition for treads of the present invention, not more than 1.0 part by mass of alkoxysilane polysulfides are present per 100 parts by mass of the diene rubber.

Another aspect of the present invention relates to a pneumatic tire, including a tread formed from the rubber composition for treads of the present invention.

### ADVANTAGEOUS EFFECTS OF INVENTION

The rubber composition for treads of the present invention is a high softener content composition incorporating at least a certain amount of a softener with a rubber component including diene rubber, contains zinc dithiophosphate and sulfur, and has a zinc oxide content below a certain level. A pneumatic tire including a tread formed from this rubber composition has high grip performance, abrasion resistance, and tensile properties, and can reduce the occurrence of blowing even during high-temperature running.

### DESCRIPTION OF EMBODIMENTS

The rubber composition for treads of the present invention (hereinafter, also referred to simply as "rubber composition") shows high grip performance, abrasion resistance, and tensile properties by incorporating at least a certain amount of a softener with a diene rubber including styrene-butadiene rubber (SBR), and further can prevent the occurrence of blowing during high-temperature running by incorporating zinc dithiophosphate while adjusting the zinc oxide content to below a certain level.

The present inventor studied the reason why blowing can easily occur during high-temperature running when a pneumatic tire is formed from a high softener content composition incorporating at least a certain amount of a softener with a diene rubber including SBR. As a result, the present inventor has found that this is due to the crosslinking properties of the diene rubber including SBR and the delayed curing reaction and non-uniform crosslinking caused by the high softener content.

Since the molecular growth step in the production of SBR is restricted, a higher styrene content makes it difficult to randomly locate styrene groups. Specifically, if the styrene content is more than 15%, the number of styrene groups adjacent to one another in the polymer chain increases. A portion in which approximately 2 to 5 styrene groups are gathered adjacent to each other becomes so hard that the free movement of the polymer decreases and thus the frequency of its contact with a composite of sulfur and vulcanization accelerators decreases. Therefore, the crosslinking reaction is less likely to occur. In other words, in a SBR with at least a certain styrene content, sulfur crosslinking is concentrated at a butadiene portion containing a small amount of styrene groups in the polymer chain, thereby making it difficult to produce uniform crosslinking. Particularly in a SBR having a molecular weight of 1,000,000 or more, the portion in which styrene groups are gathered adjacent to each other easily becomes hard like a ball so that the inside of the ball is hardly crosslinked. In high softener content compositions in which sulfur and vulcanization accelerators are adsorbed by the softeners, the curing reaction slows down. Moreover, the high softener content compositions necessarily have a high total filler content and thus tend to have a high total phr so that the vulcanizing agents and the rubber component are less likely to come into contact with each other. Therefore, the curing reaction further slows down. In conclusion, in a diene rubber including SBR, extremely non-uniform crosslinking with low crosslink density is only produced due to the crosslinking properties of SBR itself as well as the curing reaction being delayed by having a high softener content.

If such non-uniformly crosslinked rubber with low crosslink density contains a large amount of softeners, a loosely crosslinked network portion cannot withstand the inflation pressure of the volatile components or trapped air in the rubber due to the effects of the high temperatures during running and the stress resulting from mechanical strain, and as a result, honeycomb pores are formed in the loosely crosslinked network portion. This is considered to cause blowing.

As a result of extensive research, the present inventor has found that, even when at least a certain amount of a softener is incorporated with a diene rubber including SBR, the occurrence of blowing during high-temperature running can be prevented by incorporating zinc dithiophosphate while adjusting the zinc oxide content to below a certain level.

Zinc dithiophosphate contains zinc and produces a higher cure accelerating effect than zinc oxide. It shows an extremely high cure accelerating effect particularly when used in combination with vulcanization accelerators. The use of zinc dithiophosphate is considered to allow even a high softener content composition incorporating at least a certain amount of a softener with a diene rubber including SBR to undergo uniform crosslinking with proper crosslink density. Due to such uniform crosslinking with proper crosslink density, it is possible to effectively prevent the occurrence of blowing during high-temperature running while maintaining high grip performance, abrasion resistance, and tensile properties. It is also considered that when the tire temperature (rubber temperature) rises to 80°C to 120°C during running, a higher degree of re-crosslinking occurs than in the system combining sulfur and vulcanization accelerators without using zinc dithiophosphate.

The rubber composition of the present invention contains a diene rubber including SBR as a rubber component. The use of the diene rubber as a rubber component can provide good durability while ensuring good handling stability, fuel economy, and elongation at break.

Non-limiting examples of the SBR include emulsion polymerized SBR (E-SBR) and solution polymerized SBR (S-SBR). The SBR may or may not be oil extended. In particularly in view of abrasion resistance, oil extended high molecular weight SBR is preferred. In addition, chain end-modified S-SBR and main chain-modified S-SBR which show enhanced interaction with filler may be used.

The SBR preferably has a styrene content of 19% by mass or more, more preferably 21% by mass or more, still more preferably 25% by mass or more. Also, the styrene content is preferably 60% by mass or less, more preferably 55% by mass or less, still more preferably 50% by mass or less. If the styrene content is less than 19% by mass, the grip performance may not be sufficient. If the styrene content is more than 60% by mass, the styrene groups can easily be located adjacent to each other so that the polymer becomes too hard to produce uniform crosslinking, resulting in deterioration of blowing resistance during high-temperature running.

The styrene content herein is calculated based on ¹H-NMR analysis.

The SBR preferably has a weight average molecular weight (Mw) of 700,000 or more, more preferably 900,000 or more, still more preferably 1,000,000 or more. The Mw is also preferably 2,000,000 or less, more preferably 1,800,000 or less. The use of a SBR having a Mw of 700,000 or more allows for higher grip performance and abrasion resistance. If the Mw is more than 2,000,000, the occurrence of blowing during high-temperature running cannot be prevented in some cases.

Herein, the weight average molecular weight can be determined by gel permeation chromatography (GPC) (GPC-8000 series available from Tosoh Corporation, detector: differential refractometer, column: TSKGEL SUPERMALTPORE HZ-M available from Tosoh Corporation) calibrated with polystyrene standards.

The amount of the SBR based on 100% by mass of the diene rubber is preferably 60% by mass or more, more preferably 65% by mass or more, still more preferably 80% by mass or more. The upper limit of the amount of the SBR is not particularly limited, and may be 100% by mass. With the SBR in the range indicated above, the effect of the present invention can be better achieved.

In particular, the diene rubber preferably includes 60% by mass or more of a SBR having a styrene content of 19% to 60% by mass, and more preferably includes 65% by mass or more of a SBR having a styrene content of 25% to 55% by mass. This allows for higher grip performance and abrasion resistance.

Non-limiting examples of materials that can be included in the diene rubber other than SBR include isoprene-based rubbers such as natural rubber (NR), highly purified NR (UPNR), epoxidized NR (ENR), and polyisoprene rubber (IR); polybutadiene rubber (BR), styrene-isoprene-butadiene rubber (SIBR), chloroprene rubber (CR) and acrylonitrile butadiene rubber (NBR).

The rubber composition of the present invention contains at least one softener selected from the group consisting of low temperature plasticizers, process oils, and resins having a softening point of 160°C or lower. The rubber composition containing at least a certain amount of the softener(s) can provide a pneumatic tire that is excellent particularly in grip performance.

The low temperature plasticizer preferably has a freezing point of -10°C or lower. The low temperature plasticizer having such a low freezing point is effective for reducing the compound Tg or brittle temperature of the rubber composition in terms of rubber physical properties because of its SP value close to both the SP values of the polymer and the tackifying resin as well as its chemical composition. Further, it readily dissolves grip resins having a high softening point or a high SP value and is therefore effective for highly dispersing the resins in the rubber, i.e. for improving lasting blooming of the tackifying resin during running and therefore lasting grip.

The upper limit of the freezing point of the low temperature plasticizer is more preferably -15°C or lower, still more preferably -50°C or lower, while the lower limit is preferably -100°C or higher. With a freezing point falling within the range indicated above, the effect of the present invention can be better achieved.

The freezing point refers to the temperature at which a liquid is solidified by cooling, as set forth in JIS K 2269. The glass transition temperature (Tg) refers to a temperature measured using a differential scanning calorimeter (DSC) in accordance with ASTM D3418-03.

In order to ensure compatibility between the low temperature plasticizer and the diene rubber, the low temperature plasticizer preferably has a SP value of 8 to 9. The SP value refers to a solubility parameter calculated from Hansen's equation. Also, in order to enhance the compatibility, the low temperature plasticizer preferably contains an ethylhexyl group or a phenyl group because such a low temperature plasticizer is structurally similar to SBR and NR.

It should be noted that the low temperature plasticizer does not include process oils and resins described later.

Since the low temperature plasticizer can ignite when introduced into a Banbury mixer, the low temperature plasticizer preferably has a flash point of 200°C or higher. For example, in the case where the discharge temperature in kneading is set at 180°C, the maximum temperature of the rubber composition locally reaches up to 195°C. The use of the low temperature plasticizer having a flash point of 200°C or higher can reduce the risk of ignition.

In the present invention, the flash point of the low temperature plasticizer is measured by the Cleveland open cup method in accordance with JIS K 2265-4:2007.

The low temperature plasticizer is conventionally widely used for vinyl chloride, celluloses, resin plastics, various rubbers, and other materials. In the rubber composition of the present invention, the low temperature plasticizer preferably has a weight average molecular weight (Mw) of 400 or more in order to prevent its migration to adjacent components and to increase the flash point.

Herein, the weight average molecular weight can be determined by gel permeation chromatography (GPC) (GPC-8000 series available from Tosoh Corporation, detector: differential refractometer, column: TSKGEL SUPERMALTPORE HZ-M available from Tosoh Corporation) calibrated with polystyrene standards.

The low temperature plasticizer may suitably include at least one compound selected from the group consisting of phosphoric acid esters, phthalic acid esters, aliphatic polybasic acid esters, trimellitic acid esters, acetic acid esters, and ricinoleic acid esters. Among these, phosphoric acid esters and aliphatic polybasic acid esters are preferred because the effect of the present invention can be better achieved.

The above compounds preferably have a SP value of 8.0 or more. The SP value is also preferably 9.5 or less, more preferably 9.0 or less, still more preferably 8.8 or less. With a SP value falling within the range indicated above, the compatibility with diene rubber such as NR or SBR can be ensured.

The freezing point of the above compounds is preferably -100°C or higher. The freezing point is also preferably -10°C or lower, more preferably -15°C or lower, still more preferably -50°C or lower. With a freezing point falling within the range indicated above, the effect of the present invention can be well achieved.

The phosphoric acid ester may be a known phosphoric acid ester plasticizer, such as mono-, di-, or triesters of phosphoric acid with C1-C12 monoalcohols or their (poly)oxyalkylene adducts. Specific examples include tris(2-ethylhexyl)phosphate (TOP), trimethyl phosphate, triethyl phosphate, tributyl phosphate, triphenyl phosphate, tricresyl phosphate, trixylenyl phosphate, cresyl diphenyl phosphate, and 2-ethylhexyl diphenyl phosphate. Preferred among these is TOP because the effect of the present invention can be better achieved.

The phthalic acid ester may be a known phthalic acid ester plasticizer, such as diesters of phthalic acid with alcohols having about 1-13 carbon atoms. Specific examples include bis(2-ethylhexyl)phthalate, dimethyl phthalate, diethyl phthalate, dibutyl phthalate, diisodecyl phthalate, butyl benzyl phthalate, diisononyl phthalate, and ethyl phthalyl ethyl glycolate.

Examples of the aliphatic polybasic acid ester include aliphatic dibasic acid esters and aliphatic tribasic acid esters. Preferred among these are aliphatic dibasic acid esters such as adipic acid esters, azelaic acid esters, sebacic acid esters, maleic acid esters, and fumaric acid esters because the effect of the present invention can be better achieved.

Examples of aliphatic dibasic acid esters include bis[2-(2-butoxyethoxy)ethyl]adipate (BXA-N), di-n-butyl adipate, diisobutyl adipate, and bis(2-ethylhexyl)sebacate (DOS). Preferred among these is DOS or BXA-N because the effect of the present invention can be better achieved.

The trimellitic acid ester may be a known trimellitic acid ester plasticizer, such as triesters of trimellitic acid with C8-C13 saturated aliphatic alcohols. Specific examples include tri-2-ethylhexyl trimellitate, tri-n-octyl trimellitate, tridecyl trimellitate, triisodecyl trimellitate, and di-n-octyl-n-decyl trimellitate.

The acetic acid ester may be a known acetic acid ester plasticizer, such as esters of acetic acid with mono- or polyglycerol. Specific examples include glyceryl triacetate, 2-ethylhexyl acetate, and polyglycerol acetate having a degree of polymerization of polyglycerol of 2 to 4 and a degree of acetylation of 50% to 100%.

The ricinoleic acid ester may be a known ricinoleic acid ester plasticizer, such as alkyl acetyl ricinoleates (alkyl group: C1-C10) e.g. methyl acetyl ricinoleate and butyl acetyl ricinoleate.

The low temperature plasticizer may include other components in addition to the compounds described above. Examples of other components include known plasticizers other than the compounds described above, and polyalkylene glycol alkyl ethers such as diethylene glycol monobutyl ether.

The amount of the compounds described above based on 100% by mass of the low temperature plasticizer is preferably 80% by mass or more, more preferably 90% by mass or more, and may be 100% by mass. When the compounds are incorporated in the amount indicated above, the effect of the present invention can be better achieved.

Examples of the low temperature plasticizer include tris(2-ethylhexyl)phosphate (TOP, freezing point: -70°C or lower, flash point: 204°C, SP value: 8.1, Mw: 435), bis(2-ethylhexyl)sebacate (DOS, freezing point: -62°C, flash point: 222°C, SP value: 8.4, Mw: 427), bis(2-ethylhexyl) phthalate (DOP, freezing point: -51°C, flash point: 218°C, SP value: 8.9, Mw: 391), and bis[2-(2-butoxyethoxyethyl)-ethyl]adipate (BXA-N, freezing point: -19°C, flash point: 207°C, SP value: 8.7, Mw: 435). Suitable among these is TOP or BXA-N because they have higher compatibility with the rubber component, a flash point of 200°C or higher, and a weight average molecular weight as high as 400 or more.

When the rubber composition of the present invention contains the low temperature plasticizer, the amount of the low temperature plasticizer per 100 parts by mass of the diene rubber is preferably 1 part by mass or more, more preferably 3 parts by mass or more. If the amount is less than 1 part by mass, the effect of the present invention may not be sufficient. The amount is preferably 30 parts by mass or less, more preferably 20 parts by mass or less, still more preferably 15 parts by mass or less. If the amount is more than 30 parts by mass, wet grip performance, abrasion resistance, or tensile properties may be reduced.

In cases where the low temperature plasticizer includes at least one compound selected from the group consisting of phosphoric acid esters, phthalic acid esters, aliphatic polybasic acid esters, trimellitic acid esters, acetic acid esters, and ricinoleic acid esters, the amount of the above compounds in the rubber composition of the present invention is preferably 1 part by mass or more, more preferably 3 parts by mass or more per 100 parts by mass of the diene rubber. The amount is also preferably 30 parts by mass or less, more preferably 20 parts by mass or less, still more preferably 15 parts by mass or less.

Examples of the process oil include paraffinic process oils, naphthenic process oils, and aromatic process oils. Other examples include process oils having a low polycyclic aromatic (PCA) compound content from an environmental standpoint. Examples of the low PCA content process oil include treated distillate aromatic extracts (TDAE) prepared by re-extraction of oil aromatic process oils, an alternative to aromatic oils which is a mixture of asphalt and naphthene oil, mild extraction solvates (MES), and heavy naphthenic oils.

When the rubber composition of the present invention contains the process oil, the amount of the process oil per 100 parts by mass of the diene rubber is preferably 2 parts by mass or more, more preferably 5 parts by mass or more. The amount is also preferably 100 parts by mass or less, more preferably 70 parts by mass or less, still more preferably 60 parts by mass or less. With the process oil in the range indicated above, the effect of the present invention can be better achieved.

It should be noted that in cases where the diene rubber includes an oil extended diene rubber, the total amount of the softener includes the amount of the process oil contained in the oil extended diene rubber.

Examples of the resin having a softening point of 160°C or lower include coumarone-indene resin, α-methylstyrene resins, terpene resins, and alkylphenol resins.

The resin preferably has a softening point of -20°C or higher, more preferably 0°C or higher, still more preferably 40°C or higher, particularly preferably 70°C or higher. Also, the softening point is 160°C or lower, preferably 150°C or lower, more preferably 130°C or lower.

Herein, the softening point is determined as set forth in JIS K 6220-1:2001 with a ring and ball softening point measuring apparatus and is defined as the temperature at which the ball drops down.

The coumarone-indene resin refers to a resin containing coumarone and indene as monomers forming the skeleton (main chain) of the resin. Examples of monomers that can be contained in the skeleton other than coumarone and indene include styrene, α-methylstyrene, methylindene, and vinyltoluene.

The coumarone-indene resin preferably has a softening point of -20°C to 160°C. The upper limit of the softening point is more preferably 145°C or lower, still more preferably 130°C or lower. The lower limit thereof is more preferably -10°C or higher, still more preferably -5°C or higher. If the softening point is higher than 160°C, the dispersibility during kneading tends to deteriorate, resulting in poor fuel economy. The coumarone-indene resin having a softening point of lower than -20°C is difficult to produce, and it is also more likely to migrate to other components and to be volatilized, which may result in changes in its properties during use.

When the coumarone-indene resin has a softening point of 90°C to 140°C, dry grip performance is improved. Especially, the coumarone-indene resin having a softening point of 100°C to 120°C can overall increase the tanδ over a range of 0°C to 80°C, and also provides good elongation at break.

The coumarone-indene resin having a softening point of 10°C to 30°C is less effective for improving grip performance, but overall reduces the tanδ. Such a coumarone-indene resin having a softening point of 10°C to 30°C can be used mainly to improve elongation at break.

The reason why elongation at break is improved by the use of the coumarone-indene resin is that the coumarone-indene resin imparts moderate sliding properties to the crosslinked polymer chains, allowing for their uniform elongation.

Examples of the α-methylstyrene resin include α-methylstyrene homopolymer and α-methylstyrene-styrene copolymers.

The α-methylstyrene resin preferably has a softening point of -20°C to 160°C. The upper limit of the softening point is more preferably 145°C or lower, still more preferably 130°C or lower. The lower limit thereof is more preferably -10°C or higher, still more preferably -5°C or higher. If the softening point is higher than 160°C, the dispersibility during kneading tends to deteriorate, resulting in poor fuel economy. The α-methylstyrene resin having a softening point of lower than -20°C is difficult to produce, and it is also more likely to migrate to other components and to be volatilized, which may result in changes in its properties during production or use.

Examples of the terpene resin include polyterpene, terpene phenol resin, aromatic modified terpene resin, and resins obtained by hydrogenation of the foregoing.

The polyterpene refers to a resin obtained by polymerization of a terpene compound. The terpene compound refers to a hydrocarbon of the formula (C₅H₈)ₙ or an oxygen-containing derivative thereof, each of which has a terpene basic skeleton and is classified into monoterpenes (C₁₀H₁₆), sesquiterpenes (C₁₅H₂₄), diterpenes (C₂₀H₃₂), and other terpenes. Examples of the terpene compound include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene include terpene resins formed from the terpene compounds described above, such as α-pinene resin, β-pinene resin, limonene resin, dipentene resin, and β-pinene/limonene resin.

Examples of the terpene phenol resin include resins obtained by copolymerization of the terpene compounds with phenol compounds. Specific examples include resins obtained by condensation of the terpene compounds, phenol compounds, and formalin. Examples of the phenol compound include phenol, bisphenol A, cresol, and xylenol.

Examples of the aromatic modified terpene resin include resins obtained by polymerization of the terpene compounds and aromatic compounds (excluding the phenol compounds described above). Examples of the aromatic compound include petroleum-derived aromatic compounds having modifying groups attached thereto, such as specifically styrene, α-methylstyrene, vinyltoluene, isopropenyltoluene, divinyltoluene, and 2-phenyl-2-butene.

The terpene resin preferably has a softening point of 70°C to 150°C. The lower limit of the softening point is more preferably 80°C or higher. If the softening point is lower than 70°C, the high temperature grip performance or stiffness may not be sufficient. The softening point is also more preferably 145°C or lower. If the softening point is higher than 150°C, initial grip performance tends to deteriorate.

Non-limiting examples of the alkylphenol resin include alkylphenol-aldehyde condensation resins obtained by reaction of alkylphenols with aldehydes such as formaldehyde, acetaldehyde, or furfural in the presence of acid or alkali catalysts; alkylphenol-alkyne condensation resins obtained by reaction of alkylphenols with alkynes such as acetylene; and modified alkylphenol resins obtained by modification of the foregoing resins with compounds such as cashew oil, tall oil, linseed oil, various animal or vegetable oils, unsaturated fatty acids, rosin, alkylbenzene resins, aniline, or melamine. In view of the effect of the present invention, alkylphenol-alkyne condensation resins are preferred among these, with alkylphenol-acetylene condensation resins being particularly preferred.

Examples of the alkylphenol of the alkylphenol resin include cresol, xylenol, t-butylphenol, octylphenol, and nonylphenol. Among these, phenols containing branched alkyl groups such as t-butylphenol are preferred, with t-butylphenol being particularly preferred.

The alkylphenol resin preferably has a softening point of 100°C to 160°C. More preferably, the upper limit of the softening point is 150°C or lower, while the lower limit is 120°C or higher.

The alkylphenol resin having a softening point of 120°C to 160°C (e.g. Koresin having a softening point of 145°C) improves grip performance particularly at high temperatures (about 80-120°C). The combined use of the alkylphenol resin with an α-methylstyrene resin having a softening point of about 85°C (which shows excellent grip performance at low temperatures (20°C to 40°C)) can improve grip performance at a tire running temperature of 20°C to 120°C.

In order to better achieve the effect of the present invention, the resin is preferably at least one selected from the group consisting of coumarone-indene resin, α-methylstyrene resins, terpene resins, and alkylphenol resins, more preferably at least one selected from the group consisting of coumarone-indene resin, α-methylstyrene resins, and alkylphenol resins, still more preferably coumarone-indene resin and/or alkylphenol resins, particularly preferably coumarone-indene resin and alkylphenol resins.

When the rubber composition of the present contains the resin described above, the amount of the resin per 100 parts by mass of the diene rubber is preferably 1 part by mass or more, more preferably 3 parts by mass or more. The amount is also preferably 100 parts by mass or less, more preferably 70 parts by mass or less. With the resin in the range indicated above, the effect of the present invention can be better achieved.

In order to better achieve the effect of the present invention, the rubber composition of the present invention preferably contains at least two softeners selected from the group consisting of low temperature plasticizers, process oils, and resins having a softening point of 160°C or lower, and more preferably contains all the softeners: a low temperature plasticizer, a process oil, and a resin having a softening point of 160°C or lower.

The total amount of the at least one softener selected from the group consisting of low temperature plasticizers, process oils, and resins having a softening point of 160°C or lower is 40 parts by mass or more, preferably 45 parts by mass or more, more preferably 50 parts by mass or more per 100 parts by mass of the diene rubber. The total amount is also preferably 150 parts by mass or less, more preferably 145 parts by mass or less, still more preferably 140 parts by mass or less. The softener content of 40 parts by mass or more can lead to the production of a pneumatic tire having extremely high grip performance. If the softener content is more than 150 parts by mass, the modulus M300 tends to decrease so that blowing can easily occur during high-temperature running.

It should be noted that in cases where the diene rubber includes an oil extended diene rubber, the total amount of the softener includes the amount of the process oil contained in the oil extended diene rubber.

The rubber composition of the present invention contains zinc dithiophosphate. Zinc dithiophosphate is a compound represented by the formula (1) below. The zinc dithiophosphate has a zinc atom at the center of the structure and produces a higher cure accelerating effect than zinc oxide. The use of the dithiophosphate allows even a high softener content composition incorporating at least a certain amount of a softener with a rubber component including diene rubber to reduce the occurrence of blowing during high-temperature running. The use of zinc dithiophosphate also allows for sufficient crosslinking without using zinc oxide or diphenylguanidine (DPG) .

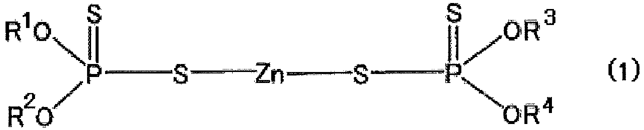

In the formula, each of R¹ to R⁴ independently represents a C1-C18 linear or branched alkyl group, or a C5-C12 cycloalkyl group.

Examples of the zinc dithiophosphate to be used include TP-50, ZBOP-S, and ZBOP-50 available from Rhein Chemie, and compounds similar to these products (e.g. compounds of formula (1) in which R¹ to R⁴ are n-propyl, isopropyl, or n-octyl groups).

In the rubber composition of the present invention, the amount of the zinc dithiophosphate (the amount of the active component) per 100 parts by mass of the diene rubber is 0.2 parts by mass or more, preferably 0.5 parts by mass or more, more preferably 1.0 part by mass or more. If the amount is less than 0.2 parts by mass, the effect of preventing the occurrence of blowing during high-temperature running cannot be achieved. Also, the amount is 15 parts by mass or less, preferably 4 parts by mass or less, more preferably 2.5 parts by mass or less. If the amount is more than 15 parts by mass, the effect of improving blowing resistance tends to be saturated, while scorch time tends to decrease, resulting in deterioration of processability.

In the rubber composition of the present invention, the amount of zinc oxide per 100 parts by mass of the diene rubber is less than 2.5 parts by mass. In the present invention, as described above, zinc dithiophosphate is used to achieve uniform crosslinking and thereby prevent the occurrence of blowing during high-temperature running. If zinc oxide is incorporated into the rubber, on the other hand, air bubbles can easily accumulate around the zinc oxide particles, so that voids are more likely to be formed. Such a nature is prominent in zinc oxide #2 and zinc oxide #1, which are typical zinc oxide products, and is also observed for finely divided zinc oxide F2 (fine particle grade). Therefore, if zinc oxide is present, unfortunately the voids around the zinc oxide may form nuclei which induce blowing. As the amount of zinc oxide increases, blowing is more likely to occur. The amount of zinc oxide is preferably 2.0 parts by mass or less. More preferably, no zinc oxide is present.

When zinc oxide is incorporated, the zinc oxide is preferably a finely divided zinc oxide having a BET value of 15 m²/g or more because it has higher dispersibility in the rubber component, and is less likely to form voids or nuclei which induce blowing.

The rubber composition of the present invention contains sulfur. Examples of the sulfur include sulfurs commonly used in the rubber industry, such as sulfur powder, precipitated sulfur, colloidal sulfur, insoluble sulfur, highly dispersible sulfur, and soluble sulfur.

The amount of the sulfur per 100 parts by mass of the diene rubber is preferably 0.4 parts by mass or more, more preferably 0.5 parts by mass or more, still more preferably 0.6 parts by mass or more. The amount of the sulfur is also preferably 2.0 parts by mass or less, more preferably 1.8 parts by mass or less, still more preferably 1.6 parts by mass or less. If the amount is less than 0.4 parts by mass, the hardness (Hs) after vulcanization or co-curing with adjacent rubber compounds may not be sufficient. If the amount is more than 2.0 parts by mass, abrasion resistance may deteriorate. It should be noted that the amount of the sulfur means the net sulfur content introduced in the final kneading process. For example, in the case of insoluble sulfur containing oil, the amount of the sulfur means the net sulfur content excluding oil.

The rubber composition of the present invention contains a vulcanization accelerator. The combined use of zinc dithiophosphate and a vulcanization accelerator can further accelerate the curing reaction, resulting in uniform crosslinking with proper crosslink density.

Examples of the vulcanization accelerator include thiazole vulcanization accelerators (benzothiazole group-containing vulcanization accelerators), thiuram vulcanization accelerators, guanidine vulcanization accelerators, and dithiocarbamate vulcanization accelerators.

In particular, the combined use of zinc dithiophosphate and a thiazole vulcanization accelerator (particularly TBBS) can produce a higher curing reaction accelerating effect. Further, a particularly high curing reaction accelerating effect can be produced by the use of a thiuram vulcanization accelerator (particularly TBZTD) and/or a dithiocarbamate vulcanization accelerator (particularly ZTC, PX) in addition to zinc dithiophosphate and a thiazole vulcanization accelerator (particularly TBBS).

Examples of the thiazole vulcanization accelerator (benzothiazole group-containing vulcanization accelerator) include sulfenamide vulcanization accelerators such as N-tert-butyl-2-benzothiazolylsulfenamide (TBBS), N-cyclohexyl-2-benzothiazolylsulfenamide (CBS), and N,N-dicyclohexyl-2-benzothiazolylsulfenamide (DCBS); and benzothiazole vulcanization accelerators such as 2-mercaptobenzothiazole, cyclohexylamine salts of 2-mercaptobenzothiazole, and di-2-benzothiazolyl disulfide. Preferred among these are sulfenamide vulcanization accelerators, with TBBS being more preferred. Examples of the thiuram vulcanization accelerator include tetramethylthiuram disulfide (TMTD), tetrabenzylthiuram disulfide (TBzTD), and tetrakis(2-ethylhexyl)thiuram disulfide (TOT-N). Preferred among these is TBzTD. Examples of the guanidine vulcanization accelerator include diphenylguanidine (DPG), diorthotolylguanidine, and orthotolylbiguanidine. Examples of the dithiocarbamate vulcanization accelerator include zinc dibenzyldithiocarbamate (ZTC) and zinc ethylphenyldithiocarbamate (PX). Among these, ZTC or PX is preferred.

However, among vulcanization accelerators, the use of DPG, which exhibited a carcinogenic effect in animal experiments as pointed out by a research institute, needs to be reduced. Another disadvantage of DPG is that it easily adsorbs silica or silane and thereby inhibits the bonding between the silica and silane, leading to deterioration of rubber physical properties. In the present invention, a favorable cure rate can be ensured by the use of zinc dithiophosphate without using DPG. Therefore, in the rubber composition of the present invention, the amount of DPG is preferably 0.5 parts by mass or less, more preferably 0.2 parts by mass or less, still more preferably 0.1 parts by mass or less, particularly preferably 0 parts by mass (no DPG).

The amount of the vulcanization accelerator (excluding DPG) per 100 parts by mass of the diene rubber is 4 parts by mass or more, preferably 5 parts by mass or more, more preferably 6 parts by mass or more. The amount of the vulcanization accelerator is also preferably 15 parts by mass or less, more preferably 12 parts by mass or less, still more preferably 10 parts by mass or less. The vulcanization accelerator content of 4 parts by mass or more can lead to more uniform crosslinking with more proper crosslink density due to the synergistic effect of the vulcanization accelerator and zinc dithiophosphate. As a result, the occurrence of blowing during high-speed running can be prevented. If the amount of the vulcanization accelerator is more than 15 parts by mass, the vulcanization accelerator may be poorly dispersed, resulting in a reduction in blowing resistance or elongation at break.

The rubber composition of the present invention preferably contains carbon black. The incorporation of carbon black improves abrasion resistance and grip performance.

The carbon black preferably has a nitrogen adsorption specific surface area (BET value) of 110 m²/g or more, more preferably 140 m²/g or more, still more preferably 151 m²/g or more. The BET value is also preferably 300 m²/g or less, more preferably 250 m²/g or less, still more preferably 200 m²/g or less. Particularly the incorporation of a carbon black having a BET value of 151 m²/g or more can provide particularly high abrasion resistance and grip performance.

The BET value of the carbon black is determined in accordance with JIS K 6217-2:2001

The amount of the carbon black per 100 parts by mass of the diene rubber is preferably 5 parts by mass or more, more preferably 20 parts by mass or more. If the amount is less than 5 parts by mass, the effect of improving abrasion resistance and grip performance may not be sufficient. The amount is also preferably 130 parts by mass or less, more preferably 120 parts by mass or less. If the amount is more than 130 parts by mass, tensile properties may be reduced.

The rubber composition of the present invention preferably contains at least one inorganic filler selected from the group consisting of compounds represented by the formula below, magnesium sulfate, and silicon carbide.

mM·xSiO_{y}·zH₂O

In the formula, M represents at least one metal selected from the group consisting of Al, Mg, Ti, Ca, and Zr, or an oxide or hydroxide of the metal; m represents an integer of 1 to 5; x represents an integer of 0 to 10; y represents an integer of 2 to 5; and z represents an integer of 0 to 10.

Examples of the inorganic filler include alumina, alumina hydrate, aluminum hydroxide, magnesium hydroxide, magnesium oxide, talc, titanium white, titanium black, calcium oxide, calcium hydroxide, magnesium aluminum oxide, clay, pyrophyllite, bentonite, aluminum silicate, magnesium silicate, calcium silicate, calcium aluminum silicate, magnesium silicate, zirconium, zirconium oxide, magnesium sulfate, and silicon carbide (SiC). These inorganic compounds may be used alone, or two or more of these may be used in combination. Preferred are inorganic fillers in which M is Al or Zr because they have a Mohs hardness of 3 or more and show water resistance and oil resistance, and they, when processed into micron-sized particles, produce a scratching effect to improve wet grip performance, as well as providing good abrasion resistance. More preferred is aluminum hydroxide or zirconium oxide because they are abundant resources and inexpensive. Aluminum hydroxide is particularly preferred as it further provides good kneading productivity and good extrusion processability.

The inorganic filler preferably has a nitrogen adsorption specific surface area (BET value) of 3 to 120 m²/g. With a BET value out of the above range, abrasion resistance and wet grip performance may deteriorate. The lower limit of the BET value is more preferably 5 m²/g, still more preferably 10 m²/g, while the upper limit is more preferably 115 m²/g, still more preferably 110 m²/g.

The BET value of the inorganic filler is measured by the BET method in accordance with ASTM D3037-81.

The inorganic filler preferably has an average particle size of 1.5 µm or less, more preferably 0.69 µm or less, still more preferably 0.6 µm or less. The average particle size is also preferably 0.2 µm or more, more preferably 0.25 µm or more, still more preferably 0.4 µm or more. If the average particle size is more than 1.5 µm, abrasion resistance and wet grip performance may decrease. If the average particle size is less than 0.2 µm, abrasion resistance or processability may decrease. The average particle size of the inorganic filler refers to a number average particle size and is measured with a transmission electron microscope.

In order to ensure abrasion resistance and wet grip performance for tires and to reduce metal wear of Banbury mixers or extruders, the inorganic filler preferably has a Mohs hardness of 7 like silica, or less than 7, more preferably of 2 to 5. Mohs hardness, which is one of the mechanical properties of materials, is a measure commonly used through the ages in mineral-related fields. Mohs harness is measured by scratching a material (e.g. aluminum hydroxide) to be analyzed for hardness with a reference material and then determining the presence or absence of scratches.

In particular, it is preferred to use an inorganic filler which has a Mohs hardness of less than 7 and whose dehydration reaction product has a Mohs hardness of 8 or more. For example, aluminum hydroxide, which has a Mohs hardness of about 3, allows for the prevention of abrasion (wear) of Banbury mixers or rolls. In addition, the upper surface layer of aluminum hydroxide undergoes a dehydration reaction (transition) due to vibration or heat build-up during running and partially due to kneading and is thereby converted to alumina having a Mohs hardness of about 9, which is equal to or harder than that of the stones on the road surface, leading to excellent abrasion resistance and wet grip performance. The internal aluminum hydroxide needs not to be entirely converted, and its partial conversion can provide the effect of scratching the road surface. Furthermore, aluminum hydroxide and alumina are stable to water, bases, and acids, and neither inhibit curing nor promote oxidative degradation. The inorganic filler after the transition more preferably has a Mohs hardness of 7 or more, with no upper limitation. Diamond has the highest hardness of 10.

The inorganic filler preferably has a thermal decomposition onset temperature (DSC endothermic onset temperature) of 160°C to 500°C, more preferably 170°C to 400°C. If the temperature is lower than 160°C, thermal decomposition or reaggregation may excessively proceed during kneading so that the metal of the kneader rotor blades, the vessel wall, or the like can be excessively worn. The thermal decomposition onset temperature of the inorganic filler is determined by differential scanning calorimetry (DSC). It should also be noted that the thermal decomposition includes dehydration reactions.

The inorganic filler to be used may be a commercial product that has the above-described BET value, and may also be, for example, an inorganic filler having been processed into particles with the properties described above by, for example, grinding. The grinding may be carried out by conventional methods, such as wet grinding or dry grinding using, for example, a jet mill, a current jet mill, a counter jet mill, or a contraplex mill.

If necessary, an inorganic filler having a certain BET value may be prepared by fractionation by a membrane filtering method widely employed in the medical or bio fields, before use as a compounding agent for rubber.

The amount of the inorganic filler per 100 parts by mass of the diene rubber is preferably 1 part by mass or more, more preferably 3 parts by mass or more, still more preferably 5 parts by mass or more. If the amount is less than 1 part by mass, the wet grip performance may not be sufficient. The amount is also preferably 70 parts by mass or less, more preferably 65 parts by mass or less, still more preferably 60 parts by mass or less. If the amount is more than 70 parts by mass, abrasion resistance or appearance after abrasion may deteriorate to an extent that cannot be compensated by adjustment with other compounding agents, and other properties such as tensile strength may also deteriorate.

The rubber composition of the present invention may contain silica. The incorporation of silica can improve rolling resistance properties while enhancing reinforcing properties.

Examples of the silica include wet-process silica and dry-process silica.

The silica preferably has a nitrogen adsorption specific surface area (BET value) of 80 m²/g or more, more preferably 120 m²/g or more, still more preferably 150 m²/g or more. The BET value is also preferably 280 m²/g or less, more preferably 260 m²/g or less, still more preferably 250 m²/g or less.

The BET value of the silica is determined by the BET method in accordance with ASTM D3037-93.

The amount of the silica per 100 parts by mass of the diene rubber is preferably 30 parts by mass or more, more preferably 40 parts by mass or more, still more preferably 50 parts by mass or more. If the amount is less than 30 parts by mass, the reinforcing properties may not be sufficient. The amount is also preferably 150 parts by mass or less, more preferably 130 parts by mass or less, still more preferably 120 parts by mass or less. If the amount is more than 150 parts by mass, the silica is less likely to disperse, which tends to result in deterioration of abrasion resistance or tensile properties.

When the rubber composition of the present invention contains silica, the rubber composition preferably further contains a silane coupling agent. The silane coupling agent may be any silane coupling agent conventionally used in combination with silica in the rubber industry.

When alkoxysilane polysulfides are used as the silane coupling agent, the amount of alkoxysilane polysulfides per 100 parts by mass of the diene rubber is preferably 1.0 part by mass or less.

Alkoxysilane polysulfides, which have weak sulfur-sulfur bonds (S_{X}) in the structure, are more likely to cause rubber scorch due to scission of the bonds during kneading. Moreover, since the bond between the silica and the silanes is also weak, the bond breaks during kneading or storage after kneading, causing a reduction in elongation at break or fuel economy. Even when alkoxysilane polysulfides are used as the silane coupling agent, their effect can be minimized by adjusting their amount to 1.0 part by mass or less.

The rubber composition of the present invention may appropriately incorporate, in addition to the above-described components, compounding agents commonly used in the tire industry, such as wax, antioxidants, mold release agents, and other materials.

The rubber composition of the present invention can be prepared by known methods which involve kneading steps such as base kneading and final kneading steps. The kneading steps may be carried out by kneading the above components using a kneading machine, for example. The kneading machine may be a conventional one, e.g. a Banbury mixer, a kneader, or an open roll mill.

In the step of kneading at least the rubber component and the inorganic filler (e.g., which corresponds to the base kneading step if the base kneading step is carried out in a single step, or the step of introducing the inorganic filler and kneading it with the rubber component if the base kneading step is divided into a series of steps as described later), for example, in the base kneading step, the discharge temperature is preferably 150°C or higher. The upper limit of the discharge temperature is not particularly limited, but in order to obtain desired properties, the discharge temperature may be adjusted as appropriate as long as it does not cause rubber scorch. The discharge temperature is preferably 190°C or lower, more preferably 185°C or lower.

The base kneading step may be divided into a series of steps for high filler content compounds with relatively small amount of softeners. For example, the base kneading step may be a single step in which the rubber component, the inorganic filler, and the like are kneaded, or alternatively may be divided into a series of steps such as: X-kneading in which the rubber component, carbon black, 2/3 silica, and 2/3 silane coupling agent are kneaded; Y-kneading in which the kneaded mixture obtained by X-kneading, the remaining silica, the remaining silane coupling agent, and the other components, excluding sulfur and vulcanization accelerators, are kneaded; and Z-kneading in which the kneaded mixture obtained by Y-kneading is re-kneaded. In this case, the inorganic filler is preferably introduced in X-kneading in which a higher kneading torque can be generated.

In the usual production methods, vulcanizing agents are introduced in final kneading. However, zinc dithiophosphate is preferably introduced in base kneading in order to enhance its dispersibility in the rubber component to produce more uniform crosslinking.

After the base kneading step, for example, a final kneading step may be performed in which the resulting kneaded mixture 1 is kneaded with vulcanizing agents (e.g. sulfur), vulcanization accelerators and the like using a kneading machine as described above (at a discharge temperature of for example 80°C to 110°C), followed by a vulcanization step in which the resulting kneaded mixture 2 (unvulcanized rubber composition) is heat pressed at 150°C to 170°C for 10 to 30 minutes, whereby a rubber composition of the present invention can be prepared.

The rubber composition of the present invention is used for treads of pneumatic tires. In particular, the rubber composition can be suitably used for cap treads which form outer surface layers of multi-layered treads. For example, the rubber composition is suitable for an outer surface layer (cap tread) of a tread having a two layer structure consisting of the outer surface layer and an inner surface layer (base tread).

The pneumatic tire of the present invention can be produced from the rubber composition by usual methods. Specifically, the pneumatic tire may be produced as follows: an unvulcanized rubber composition incorporating various additives as appropriate is extruded into the shape of a tire tread, formed on a tire building machine, and assembled with other tire components to build an unvulcanized tire; and the unvulcanized tire is heated and pressurized in a vulcanizer.

The pneumatic tire of the present invention is suitable for passenger vehicles, large passenger vehicles, large SUVs, heavy duty vehicles such as trucks and buses, and light trucks. The pneumatic tire can be used as any of the summer tires or studless winter tires for these vehicles.

The pneumatic tire of the present invention in which the occurrence of blowing can be reduced even during high-temperature running is also suitable as a racing tire.

### EXAMPLES

The present invention is more specifically described with reference to non-limiting examples.

The chemicals used in the examples and comparative examples are listed below.

### <Rubber component (NR)>

TSR20

### <Rubber component (SBR)>

Modified SBR 1: Product prepared as described below (oil extender: 37.5 parts, styrene content: 41%, vinyl content: 40%, Tg: -29°C, weight average molecular weight: 1,190,000)
N9548: Product available from Zeon Corporation (oil extender: 37.5 parts, styrene content: 35%, vinyl content: 18%, Tg: -40°C, weight average molecular weight: 1,090,000)
Modified SBR 2: 0122 available from JSR Corporation (oil extender: 34 parts, styrene content: 36%, vinyl content: 18%, Tg: -44°C, weight average molecular weight: 945,000)
NS612: Product available from Zeon Corporation (non-oil extended, styrene content: 15%, vinyl content: 30%, Tg: -65°C, weight average molecular weight: 780,000)

### <Method for preparation of modified SBR 1>

### (1) Preparation of chain end modifier

A 250-mL measuring flask was charged with 20.8 g of 3-(N,N-dimethylamino)propyltrimethoxysilane (available from AZmax. Co.) in a nitrogen atmosphere, and then anhydrous hexane (available from Kanto Chemical Co., Inc.) was added to give a total volume of 250 mL of a chain end modifier.

### (2) Preparation of modified SBR 1

A sufficiently nitrogen-purged, 30-L pressure-resistant vessel was charged with 18 L of n-hexane, 800 g of styrene (available from Kanto Chemical Co., Inc.), 1,200 g of butadiene, and 1.1 mmol of tetramethylethylenediamine, and then the temperature was raised to 40°C. Next, 1.8 mL of 1.6 M butyllithium (available from Kanto Chemical Co., Inc.) was added to the mixture, and then the temperature was raised to 50°C, followed by stirring for three hours. Subsequently, 4.1 mL of the chain end modifier was added to the resulting mixture, followed by stirring for 30 minutes. After 15 mL of methanol and 0.1 g of 2,6-tert-butyl-p-cresol (available from Ouchi Shinko Chemical Industrial Co., Ltd.) were added to the reaction solution, 1,200 g of TDAE was added, followed by stirring for 10 minutes. Thereafter, aggregates were collected from the polymer solution by steam stripping. The aggregates were dried under reduced pressure for 24 hours to give modified SBR 1. The modified SBR 1 had a bound styrene content of 41% by mass, a Mw of 1,190,000, and a vinyl content of 40 mol%.

### <Rubber component (BR)>

CB24: High-cis BR synthesized using a Nd catalyst, available from LANXESS

### <Carbon black>

HP180: Product available from Orion Engineered Carbons (BET value: 175 m²/g)
HP160: Product available from Orion Engineered Carbons (BET value: 153 m²/g)
EB201: Pilot product available from Orion Engineering (former Evonik) (BET value: estimated 240 m²/g)

### <Silica>

VN3: ULTRASIL VN3 available from Evonik (BET value: 175 m²/g)

### <Aluminum hydroxide (inorganic filler)>

Ground type (1): Dry ground product of ATH#B available from Sumitomo Chemical Co., Ltd. (BET value: 35 m²/g)
Ground type (2): Dry ground product of ATH#B available from Sumitomo Chemical Co., Ltd. (BET value: 100 m²/g)
ATH#B: Product available from Sumitomo Chemical Co., Ltd. (BET value: 15 m²/g, average particle size: 0.6 µm)

### <Low temperature plasticizer>

TOP: Tris(2-ethylhexyl) phosphate (freezing point: -70°C or lower, flash point: 204°C, SP value: 8.1, Mw: 435) available from Daihachi Chemical Industry Co., Ltd.
DOS: Bis(2-ethylhexyl)sebacate (freezing point: -62°C, flash point: 222°C, SP value: 8.4, Mw: 427) available from Daihachi Chemical Industry Co., Ltd.

### <Process oil>

TDAE oil: Vivatec 500 available from H&R

### <Resin>

C120: Coumarone-indene resin (softening point: 120°C, Tg: 65°C) available from Rutgers Chemicals
SA85: α-Methylstyrene resin Sylvares SA85 (softening point: 85°C, Tg: 43°C) available from Arizona Chemical
Koresin: Koresin (p-t-butylphenol acetylene resin, softening point: 145°C, Tg: 98°C) available from BASF
YS resin TO125: YS resin TO125 (aromatic modified terpene resin, softening point: 125°C) available from Yasuhara Chemical Co., Ltd.

### <Zinc oxide>

F2: ZINCOX SUPER F2 (BET value: 20 m²/g, primary particle size calculated from BET value: 65 nm) available from Hakusui Tech Co., Ltd.
Ginrei R: Ginrei R (BET value: 5 m²/g) available from Toho Zinc Co., Ltd.

### <Coupling agent>

Si69: Silane coupling agent (alkoxysilane polysulfide) available from Evonik
NXT: Silane coupling agent ((C₂H₅O)₃Si-C₃H₆-S-CO-C₇H₁₅) available from Momentive Performance Materials Inc.

### <Antioxidant>

6PPD: Antigene 6C (N-(1,3-dimethylbutyl)-N'-phenyl-p-phenylenediamine) available from Sumitomo Chemical Co., Ltd.
TMQ: NOCRAC 224 (2,2,4-trimethyl-1,2-dihydroquinoline polymer) available from Ouchi Shinko Chemical Industrial Co., Ltd.

### <Vulcanizing agent>

Zinc dithiophosphate TP-50: Zinc dithiophosphate, TP-50 (formula (1) where R¹ to R⁴ are n-butyl groups, active component: 50% by mass) available from Rhein Chemie
Zinc dithiophosphate ZBOP-50: Zinc dithiophosphate, ZBOP-50 (formula (1) where R¹ to R⁴ are alkyl groups, active component: 50% by mass) available from Rhein Chemie
Stearic acid: Stearic acid "TSUBAKI" available from NOF Corporation
5% oil-containing sulfur powder: HK-200-5 available from Hosoi Chemical Industry Co., Ltd.

### <Vulcanization accelerator>

TBBS: NOCCELER NS-G (N-tert-butyl-2-benzothiazolylsulfeneamide) available from Ouchi Shinko Chemical Industrial Co., Ltd.
ZTC: NOCCELER ZTC (zinc dibenzyldithiocarbamate) available from Ouchi Shinko Chemical Industrial Co., Ltd.
PX: NOCCELER PX (zinc ethylphenyldithiocarbamate) available from Ouchi Shinko Chemical Industrial Co., Ltd.
TBZTD: Perkacit TBZTD (tetrabenzylthiuram disulfide) available from Flexsys
DPG: NOCCELER D (N,N-diphenylguanidine) available from Ouchi Shinko Chemical Industrial Co., Ltd.

### (Examples and Comparative Examples)

According to the formulations and kneading conditions shown in Tables 1 and 2, the entire amounts of the chemicals, excluding the sulfur and vulcanization accelerators, were first kneaded using a 4-L Banbury mixer for five minutes at a discharge temperature of 150°C (base kneading). Subsequently, to the kneaded mixture were added the sulfur and vulcanization accelerators, followed by kneading for three minutes using an open roll mill (final kneading) to obtain an unvulcanized rubber composition. At this time, the maximum rubber temperature was set at 100°C. The zinc dithiophosphates were introduced in the base kneading in the examples other than Example 27.

The unvulcanized rubber composition was heat pressed at 170°C for 12 minutes to obtain a vulcanized rubber composition.

Separately, the unvulcanized rubber composition prepared as above was formed into a tread shape and assembled with other tire components on a tire building machine, followed by press vulcanization at 170°C for 12 minutes to obtain a test tire (tire size: 245/40R18).

The unvulcanized rubber compositions and test tires prepared as above were evaluated as follows. Tables 1 and 2 show the evaluation results.

### (Blowing resistance)

The test tires were mounted on a front-engine, rear-wheel-drive car of 2000 cc displacement made in Japan and then subjected to a 500 km long run in an OKAYAMA International Circuit track in which the road surface was dry and had a temperature of 20°C to 30°C.

After the run, the appearance of the cross section of the tires was observed for degree of formation of honeycomb pores at a position 1 mm above the JLB cord in the tread to evaluate blowing resistance.

The degrees of formation of honeycomb pores are expressed as an index, with Comparative Example 1 set equal to 100. A higher index indicates better blowing resistance. The blowing resistance target is 120 or more.

### (Dry grip performance)

The test tires were mounted on a front-engine, rear-wheel-drive car of 2000 cc displacement made in Japan and then subjected to a 500 km long run in an OKAYAMA International Circuit track in which the road surface was dry and had a temperature of 20°C to 30°C.

The test driver evaluated the stability of steering control during the run. The results are expressed as an index, with Comparative Example 1 set equal to 100. A higher index indicates better dry grip performance. The dry grip performance target is 100 or more.

### (Abrasion resistance)

The test tires were mounted on a front-engine, rear-wheel-drive car of 2000 cc displacement made in Japan and then subjected to a 500 km long run in an OKAYAMA International Circuit track in which the road surface was dry and had a temperature of 20°C to 30°C.

After the run, the remaining groove depth in the tire tread rubber (initial depth: 8.0 mm) was measured to evaluate abrasion resistance. A larger average remaining depth of the main grooves indicates better abrasion resistance. The remaining groove depths are expressed as an index, with Comparative Example 1 set equal to 100. A higher index indicates better abrasion resistance. The abrasion resistance target is 105 or more.

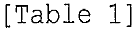

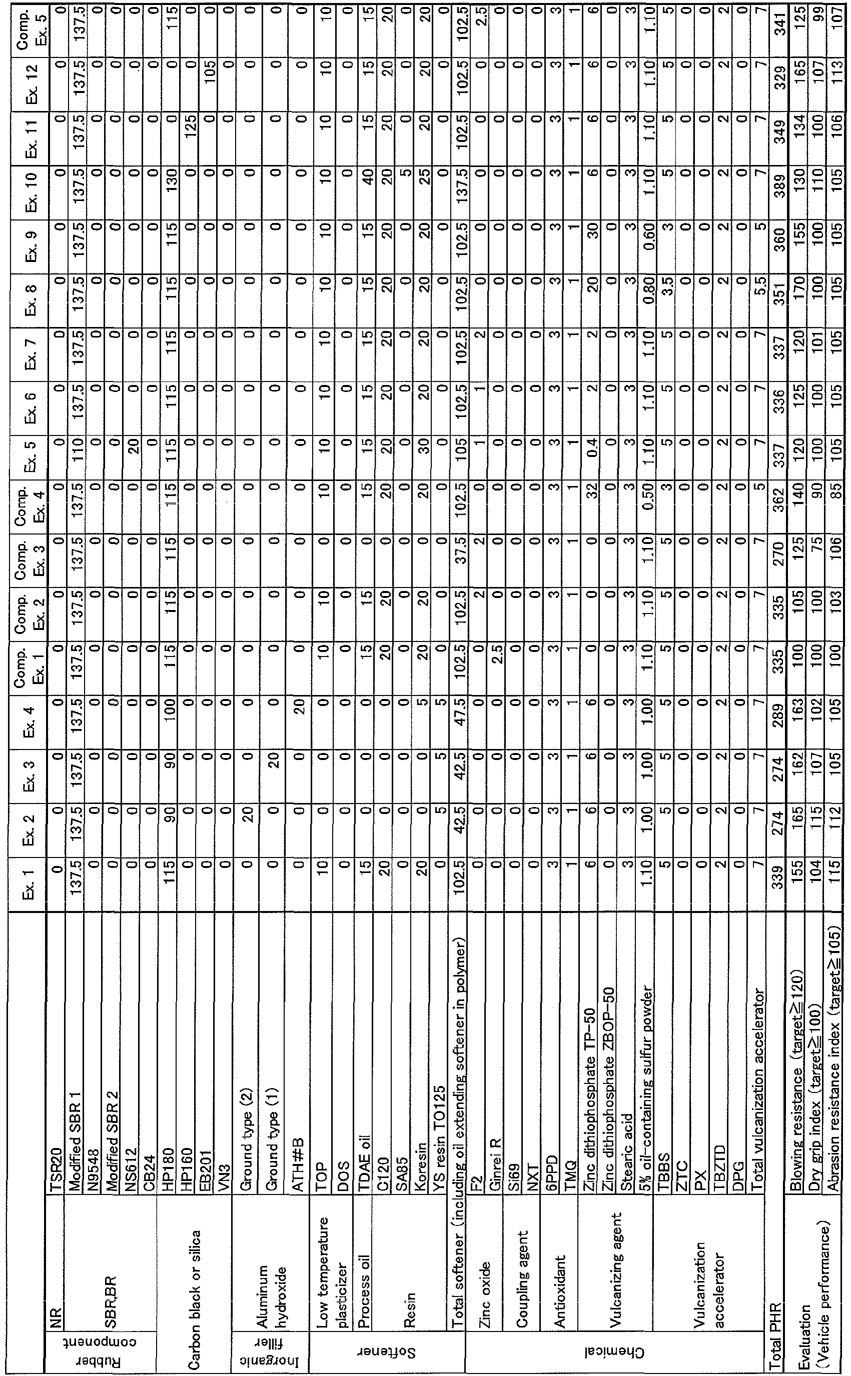

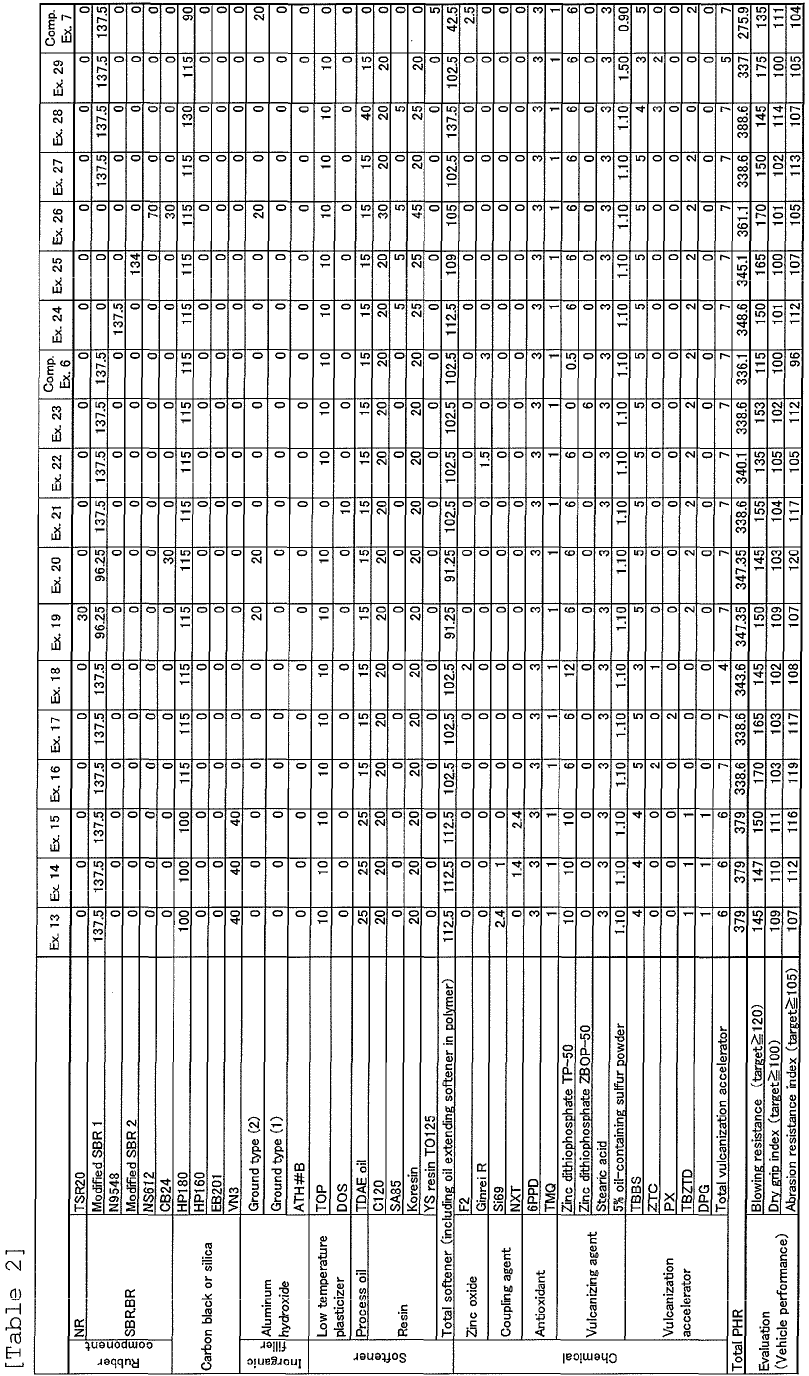

The evaluation results in Tables 1 and 2 demonstrate that in the examples using a high softener content composition incorporating at least a certain amount of a softener with a rubber component including diene rubber, and further incorporating zinc dithiophosphate while adjusting the zinc oxide content to below a certain level, the dry grip performance target of 100 and the abrasion resistance target of 105 were achieved, and further the blowing resistance target of 120 was also achieved.

## Claims

1. A rubber composition for treads, comprising:
a diene rubber including styrene-butadiene rubber;
at least one softener selected from the group consisting of low temperature plasticizers, process oils, and resins having a softening point of 160°C or lower;
vulcanizing agents comprising zinc dithiophosphate and sulfur; and
a vulcanization accelerator,
wherein, per 100 parts by mass of the diene rubber, there are 40 parts by mass or more of the softener, 0.2 to 15 parts by mass of the zinc dithiophosphate, 4 parts by mass or more of the vulcanization accelerator, and less than 2.5 parts by mass of zinc oxide.

2. The rubber composition for treads according to claim 1,
wherein the diene rubber includes 60% by mass or more of a styrene-butadiene rubber having a styrene content of 19% to 60%.

3. The rubber composition for treads according to claim 1,
wherein not more than 2.0 parts by mass of zinc oxide is present per 100 parts by mass of the diene rubber.

4. The rubber composition for treads according to claim 1,
wherein no zinc oxide is present in the rubber composition.

5. The rubber composition for treads according to any one of claims 1 to 4,
wherein the rubber composition comprises a carbon black having a BET value of 151 m²/g or more in an amount of 5 to 130 parts by mass per 100 parts by mass of the diene rubber.

6. The rubber composition for treads according to any one of claims 1 to 5,
wherein the rubber composition comprises an inorganic filler having a BET value of 3 to 120 m²/g in an amount of 1 to 70 parts by mass per 100 parts by mass of the diene rubber, and the inorganic filler comprises at least one selected from the group consisting of compounds represented by the formula below, magnesium sulfate, and silicon carbide,
mM·xSiO_{y}·zH₂O
wherein M represents at least one metal selected from the group consisting of Al, Mg, Ti, Ca, and Zr, or an oxide or hydroxide of the metal; m represents an integer of 1 to 5; x represents an integer of 0 to 10; y represents an integer of 2 to 5; and z represents an integer of 0 to 10.

7. The rubber composition for treads according to any one of claims 1 to 6,
wherein not more than 1.0 part by mass of alkoxysilane polysulfides are present per 100 parts by mass of the diene rubber.

8. A pneumatic tire, comprising a tread formed from the rubber composition for treads according to any one of claims 1 to 7.

## Patentansprüche

1. Kautschukzusammensetzung für Laufflächen, umfassend:
einen Dienkautschuk, der Styrol-Butadien-Kautschuk beinhaltet;
wenigstens einen Weichmacher ausgewählt aus der Gruppe bestehend aus Niedertemperatur-Plastifizierungsmitteln, Prozessölen und Harzen mit einem Erweichungspunkt von 160°C oder weniger;
Vulkanisierungsmittel, die Zinkdithiophosphat und Schwefel umfassen; und
einen Vulkanisierungsbeschleuniger,
wobei, pro 100 Massenteilen des Dienkautschuks, 40 Massenteile oder mehr des Weichmachers, 0,2 bis 15 Massenteile des Zinkdithiophosphats, 4 Massenteile oder mehr des Vulkanisierungsbeschleunigers und weniger als 2,5 Massenteile des Zinkoxids vorhanden sind.

2. Kautschukzusammensetzung für Laufflächen nach Anspruch 1,
wobei der Dienkautschuk 60 Massen-% oder mehr eines Styrol-Butadien-Kautschuks mit einem Styrolgehalt von 19% bis 60% beinhaltet.

3. Kautschukzusammensetzung für Laufflächen nach Anspruch 1,
wobei nicht mehr als 2,0 Massenteile Zinkoxid pro 100 Massenteilen des Dienkautschuks vorhanden ist.

4. Kautschukzusammensetzung für Laufflächen nach Anspruch 1,
wobei kein Zinkoxid in der Kautschukzusammensetzung vorhanden ist.

5. Kautschukzusammensetzung für Laufflächen nach einem der Ansprüche 1 bis 4,
wobei die Kautschukzusammensetzung einen Ruß mit einem BET-Wert von 151 m²/g oder mehr in einer Menge von 5 bis 130 Massenteilen pro 100 Massenteile des Dienkautschuks umfasst.

6. Kautschukzusammensetzung für Laufflächen nach einem der Ansprüche 1 bis 5,
wobei die Kautschukzusammensetzung einen anorganischen Füllstoff mit einem BET-Wert von 3 bis 120 m²/g in einer Menge von 1 bis 70 Massenteilen pro 100 Massenteilen des Dienkautschuks umfasst, und der anorganische Füllstoff wenigstens eines ausgewählt aus der Gruppe bestehend aus Verbindungen dargestellt durch die folgende Formel, Magnesiumsulfat und Siliciumcarbid umfasst,
mM·xSiO_{y}·zH₂O
wobei M wenigstens ein Metall ausgewählt aus der Gruppe bestehend aus Al, Mg, Ti, Ca und Zr oder ein Oxid oder Hydroxid des Metalls darstellt; m eine ganze Zahl von 1 bis 5 darstellt; x eine ganze Zahl von 0 bis 10 darstellt; y eine ganze Zahl von 2 bis 5 darstellt; und z eine ganze Zahl von 0 bis 10 darstellt.

7. Kautschukzusammensetzung für Laufflächen nach einem der Ansprüche 1 bis 6,
wobei nicht mehr als 1,0 Massenteile Alkoxysilanpolysulfide pro 100 Massenteilen des Dienkautschuks vorhanden sind.

8. Luftreifen, der eine Lauffläche umfasst, die aus der Kautschukzusammensetzung für Laufflächen nach einem der Ansprüche 1 bis 7 gebildet ist.

## Revendications

1. Composition de caoutchouc pour bandes de roulement, comprenant :
un caoutchouc diène comprenant un caoutchouc styrène-butadiène ;
au moins un assouplissant choisi dans le groupe constitué de plastifiants à basse température, d'huiles de traitement, et de résines ayant un point de ramollissement de 160 °C ou moins ;
des agents de vulcanisation comprenant du dithiophosphate de zinc et du soufre ; et
un accélérateur de vulcanisation,
dans laquelle, pour 100 parties en masse du caoutchouc diène, il y a 40 parties en masse ou plus d'assouplissant, 0,2 à 15 parties en masse du dithiophosphate de zinc, 4 parties en masse ou plus de l'accélérateur de vulcanisation, et moins de 2,5 parties en masse d'oxyde de zinc.

2. Composition de caoutchouc pour bandes de roulement selon la revendication 1, dans laquelle le caoutchouc diène comprend 60 % en masse ou plus d'un caoutchouc styrène-butadiène ayant une teneur en styrène de 19 % à 60 %.

3. Composition de caoutchouc pour bandes de roulement selon la revendication 1,
dans laquelle pas plus de 2,0 parties en masse d'oxyde de zinc est présent pour 100 parties en masse du caoutchouc diène.

4. Composition de caoutchouc pour bandes de roulement selon la revendication 1, dans laquelle aucun oxyde de zinc n'est présent dans la composition de caoutchouc.

5. Composition de caoutchouc pour bandes de roulement selon l'une quelconque des revendications 1 à 4,
où la composition de caoutchouc comprend un noir de carbone ayant une valeur BET de 151 m²/g ou plus en une quantité de 5 à 130 parties en masse pour 100 parties en masse du caoutchouc diène.

6. Composition de caoutchouc pour bandes de roulement selon l'une quelconque des revendications 1 à 5,
où la composition de caoutchouc comprend une charge inorganique ayant une valeur BET de 3 à 120 m²/g en une quantité de 1 à 70 parties en masse pour 100 parties en masse du caoutchouc diène, et la charge inorganique comprend au moins l'un choisi dans le groupe constitué de composés représentés par la formule ci-dessous, du sulfate de magnésium, et du carbure de silicium,
mM.xSiO_{y}.2O
dans laquelle M représente au moins un métal choisi dans le groupe constitué de Al, Mg, Ti, Ca et Zr, ou un oxyde ou un hydroxyde du métal ; m représente un entier de 1 à 5 ; x représente un entier de 0 à 10 ; y représente un entier de 2 à 5 ; et z représente un entier de 0 à 10.

7. Composition de caoutchouc pour bandes de roulement selon l'une quelconque des revendications 1 à 6,
dans laquelle pas plus de 1,0 partie en masse de polysulfures d'alcoxysilane n'est présente pour 100 parties en masse du caoutchouc diène.

8. Pneumatique, comprenant une bande de roulement formée à partir de la composition de caoutchouc pour bandes de roulement selon l'une quelconque des revendications 1 à 7.
